# EUROPÄISCHE PATENTSCHRIFT

(11) **EP 0 974 631 B1**
(45) Veröffentlichungstag und Bekanntmachung des Hinweises auf die Patenterteilung: **01.10.2003**
(21) Anmeldenummer: 99113815.7
(22) Anmeldetag: 15.07.1999
(51) Int. Cl.: C09J 7/00

(54) **Klebfolienstreifen und seine Verwendung**
Adhesive tape and use thereof
Ruban adhésif et son utilisation

(30) Priorität: 23.07.1998 DE 19833174
(43) Veröffentlichungstag der Anmeldung: 26.01.2000
(73) Patentinhaber: Tesa AG, 20253 Hamburg (DE)
(72) Erfinder: Zimmermann, Dieter, 21635 Jork (DE); Kehler, Harald, Dr., 21109 Hamburg (DE); Schulze, Walter, 25421 Pinneberg (DE)

(56) Entgegenhaltungen:
- DE-A- 3 331 016

## Beschreibung

Die Erfindung betrifft einen doppelseitig klebenden Klebfolienstreifen und seine Verwendung für konstruktive Verklebungen, die trotz hohen Anforderungsprofils leicht wieder trennbar ist.

Klebfolien für konstruktive Verklebungen sind bekannt und im Handel erhältlich. Damit hergestellte Verklebungen sind jedoch kaum wieder zu trennen, ohne die Substrate zu zerstören oder zu beschädigen.

Klebfolien für reversible Verklebungen sind ebenfalls bekannt und im Handel erhältlich. Insbesondere sind Klebfolien für wiederlösbare Verklebungen, die durch Ziehen in Richtung der Verklebungsebene wiederlösbar sind, bekannt und im Handel unter der Bezeichnung "tesa Power-Strips" erhältlich. Damit hergestellte Verklebungen bieten kraftvollen Halt und lassen sich doch spurlos wieder ablösen ohne Beschädigung des Untergrundes oder der Fügeteile, wie dies in DE 33 31 016 C2 beschrieben ist. Die erzielbaren Festigkeiten sind jedoch für konstruktive Verklebungen unzureichend.

DE 3714453, DE 4222849, DE 4233604, DE 4339604, DE 4428587, DE 4431914 und DE 19511288 beschreiben spezielle Ausführungen und Applikationen vorgenannter Klebfolien.
An die in diesen Druckschriften beschriebenen Klebfolien werden hohe Anforderungen gestellt, etwa:
- Für eine einwandfreie Funktion müssen sie eine für die jeweilige Anwendung ausreichende Anfaßklebrigkeit (für leichte Verklebung = geringer Anpreßdruck und für sofortige Belastung) und Verklebungsfestigkeit (während der Applikationsdauer) bieten.
- Für den Ablöseprozeß sind eine hohe Dehnfähigkeit bei gleichzeitig niedriger Dehnspannung und eine im Vergleich zur Ablösekraft (Stripkraft) hohe Reißfestigkeit Vorraussetzung.
- Vorteilhaft für den Ablöseprozeß ist eine deutliche Reduzierung der Anfaßklebrigkeit (tack) beim Verstrecken.
- Für längerfristige Verklebungen ist eine entsprechende Alterungsbeständigkeit in der Klebfuge essentiell.
- Bei hohen mechanischen Beanspruchungen (hohe Scher- und Kippscherbelastungen) kann es bei Einsatz ungesättigter Styrolblockcopolymere (Styrol-, Isopren-, Styrol-Butadien-Blockcopolymere) zur Ausbildung von Ozonrissen im Klebstoff kommen und damit zum Einreißen der Klebfolien beim Ablöseprozeß oder zum Ablösen des verklebten Gegenstandes währen der Applikationsdauer.
- Insbesondere bei Verklebungen welche hohen Scher- und Kippscherbelastungen ausgesetzt sind, ist bei Applikationstemperaturen > ca. 35° C eine möglichst hohe Thermoscherfestigkeit für eine ausreichende Verklebungsfestigkeit wesentlich.
- Für viele Anwendungen ist es erwünscht, die Klebfolie zu pigmentieren: Der Einsatz von Pigmenten, z.B. TiO₂ kann sich jedoch insbesondere bei hohen Einsatzkonzentrationen nachteilig auf die Verklebungsfestigkeit auswirken. Aber auch diese Klebfolien sind für konstruktive Verklebungen unzureichend.

Zerstörungsfrei wiederlösbare Verbindungen mit Produkten nach DE 33 31 016 (z.B. Power-Strip ergeben Festigkeiten im Bereich von 1 - 2 kg (nach BDF-Prüfung): JO PMX 100, Kippscherstandzeittest), Scherfestigkeiten von 30 - 40 N/cm² (nach BDF-Klebfestigkeit JO PM 0020). Um in den Bereich der konstruktiven, zerstörungsfrei wiederablösbaren Klebverbindungen vorzudringen, sind höhere Werte erforderlich.

Es sind aus DE 33 31 016 C2 aber auch bereits Klebfolien der geschilderten Art bekannt, deren Masse wärmeaktivierbar eingestellt ist. Damit sind Produkte offenbart, die einem hot-melt ähnlich bei Raumtemperatur nicht kleben, unter Wärme jedoch kleben. Auch mit solchen Produkten lassen sich keine für Konstruktionsklebstoffe ausreichenden Festigkeiten erzielen.

Somit war es Aufgabe der Erfindung, das oben geforderte Anforderungsprofil insb. > 100 N/cm² Scherfestigkeit) zu erreichen, dennoch aber ein leichtes Lösen der Klebverbindung zu ermöglichen.

Gelöst wird diese Aufgabe durch einen Klebfolienstreifen, wie er in den Ansprüchen näher gekennzeichent ist.

Insbesondere ergibt sich durch den Einsatz von Reaktivharz, vorzugsweise in Kombination mit Magnesiumoxid, in Kombination mit Wärmehärtung aus den DE 33 31 016 Formulierungen, eine Konstruktionsklebstofffolie mit einer gewissen Fixierhilfe, die für den Einsatz in der Praxis damit besonders geeignet ist.

Besonders geeignet sind Verklebungen mit Abstandshalter an zumindest einem Substrat, wie dies in DE 196 37 223 A1 beschrieben ist. Wenn mit 0,5 mm Abstandshalter verklebt wird, ist der Verbund (z.B. Metall/Glas) auf glatten Oberflächen besonders gut strippbar, d.h. er kann leicht und rückstands- und zerstörungsfrei getrennt werden.

Erfindungsgemäß geeignet sind als Reaktivharz insbesondere Alkylphenolharze, die insbesondere basenreaktiv sind, wie sie als Klebstoffe auf Basis Polychloropren im Handel sind, z.B. als Alresen ® PA 565 (Hoechst).

Im folgenden soll die Erfindung anhand von Beispielen erläutert werden, ohne sie jedoch unnötig einschränken zu wollen.

### Beispiel 1

In einer Rezeptur wurde das reaktive Akylphenolharz (Alresen PA 565) der Fa. Hoechst mit eingesetzt (für Pentalyn H, Fa. Hercules), alles in Gewichtsteilen:

| | |
|---|---|
| 53,5 Cariflex TR 1101 | Shell |
| 25,2 Pentalyn H | Hercules |
| 16,9 Alresen PA 565 | Hoechst |
| 2,2 Kronos 2160 - TiO₂ | Kronos |
| 2,2 Maglite DE - MgO | Merck |

Die Herstellung erfolgte ohne Alresen PA 565 bei 180° C im Kneter mit CO ₂ Einleitung. Danach wurde auf 150° C gekühlt, Alresen PA 565 zugegeben und kurz homogen eingearbeitet. Die Masse wurde extrudiert zu einer 0,8 mm dicken Folie, die einseitig mit Trennpapier abgedeckt und zu Rollen geschnitten, gestanzt zu Strips (2 x 5 cm). Die Reißfestigkeit dieser Rezeptur betrug:
ca 160 N/cm (nach BDF-Zugversuch-Prüfvorschrift JO PMC 001, Probekörper nach DIN EN 20527/2)

Formulierungen ohne Alresen 565 (dafür Pentalyn H) ergaben unter gleichen Bedingungen ca. 60 N/mm². Probeverklebungen von Holz/Holz und Stahl/Hart-PVC (bei 180°C/3 Min. unter leichtem Andruck einer beheizten Presse) ergaben Bindefestigkeiten von ca. 120N/cm² und liegen somit im Bereich der konstruktiven Klebstoffe (tesa-Power Strip-Festigkeiten liegen in der Größenordnung von 30 - 40 N/cm²).

Eine mit dem Bügeleisen (Leineneinstellung ca. 180°C) 1. Min. lang verklebte Metallplatte zeigte sehr gute Kippscherstandzeiten für 4 kg-Last (RT), bei 140°C werden noch Belastungen von 1 kg gehalten. Die Rezeptur ohne Reaktivharz hält eine 1 kg-Belastung bis 80°C aus.

Die gleiche Verklebung, kombiniert mit dem tesa Systemhaken konnte über längere Zeit (4 Wochen) mit 16 kg belastet werden.

## Patentansprüche

1. Doppelseitig klebender Klebfolienstreifen für wiederlösbare Klebbindungen mit einer Klebmasse auf Basis von
a) thermoplastischem Kautschuk und
b) klebrigmachenden Harzen, wobei die Klebfolie
c) hohe Elastizität und
d) geringe Plastizität aufweist und wobei
e) die Adhäsion geringer als die Kohäsion ist,
f) das Haftvermögen beim Dehnen der Folie weitgehend verschwindet,
g) das Verhältnis von Abzugskraft zu Reißlast 1 : 1,5 oder größer ist, und wobei
h) eine damit hergestellte Klebbindung durch Ziehen an der Klebfolie in Richtung der Verklebungsebene lösbar ist, **dadurch gekennzeichnet, dass**
i) die Klebmasse ein basenreaktives Alkylphenolharz zugemischt enthält.

2. Klebfolienstreifen nach Anspruch 1, **dadurch gekennzeichnet, dass** das Reaktivharz ein durch Wärme aktivierbares Harz ist.

3. Klebfolienstreifen nach Anspruch 1, **dadurch gekennzeichnet, dass** das Reaktivharz von 10 bis 30 Gew. %, insb. von 15 bis 25 Gew. % der Klebmasse ausmacht.

4. Klebfolienstreifen nach Anspruch 1, **dadurch gekennzeichnet, dass** das Reaktivharz zusammen mit einem Metalloxid, insb. Magnesiumoxid eingesetzt wird.

5. Klebfolienstreifen nach Anspruch 5, **dadurch gekennzeichnet, dass** das Metalloxid 1 bis 3 Gew. %, insb. von 1,5 bis 2,5 Gew. % der Klebmasse ausmacht.

6. Klebfolienstreifen nach Anspruch 1, worin die Masse selbstklebend eingestellt ist.

7. Klebfolienstreifen nach Anspruch 1, enthaltend Antioxidantien. UV-Stabilisatoren, Farbstoffe, Füllstoffe und/oder andere übliche Hilfsmittel.

8. Klebfolienstreifen nach Anspruch 1, mit einer Dicke von 0,4 mm bis 0,8 mm.

9. Klebfolienstreifen nach Anspruch 1, enthaltend als thermoplastischen Kautschuk ein Styrol-Butadien-Blockpolymer und als klebrigmachenden Harz ein Colophonium-Derivat.

10. Klebfolienstreifen nach Anspruch 1, wobei sich die Abzugskraft zur Reißlast wie 1:2 bis 1:3 verhalten.

11. Klebfolienstreifen nach Anspruch 1, wobei die Rohstoff-Mischung heiß geknetet und extrudiert ist.

12. Verwendung eines Klebfolienstreifens nach einem der Ansprüche 1-11 für konstruktive Verklebungen, die trotz ihrer hohen Scherfestigkeit rückstands- und beschädigungslos durch Ziehen an der Folie in Richtung der Verklebungsebene wieder getrennt werden kann.

## Claims

1. Double-sided adhesive tape strip for rereleasable adhesive bonds, comprising an adhesive composition based on
a) thermoplastic rubber and
b) tackifying resins, the adhesive tape possessing
c) high elasticity and
d) low plasticity and
e) the adhesion being lower than the cohesion,
f) the adhesion largely disappearing when the tape is extended,
g) the ratio of peel force to tensile strength being 1:1.5 or more, and
h) an adhesive bond produced therewith being detachable by pulling on the adhesive tape in the direction of the bond plane, **characterized in that**
i) the adhesive composition comprises an admixed base-reactive alkylphenol resin.

2. Adhesive tape strip according to Claim 1, **characterized in that** the reactive resin is a heat-activatable resin.

3. Adhesive tape strip according to Claim 1, **characterized in that** the reactive resin makes up from 10 to 30% by weight, in particular from 15 to 25% by weight, of the adhesive composition.

4. Adhesive tape strip according to Claim 1, **characterized in that** the reactive resin is employed together with a metal oxide, especially magnesium oxide.

5. Adhesive tape strip according to Claim 5, **characterized in that** the metal oxide makes up from 1 to 3% by weight, in particular from 1.5 to 2.5% by weight, of the adhesive composition.

6. Adhesive tape strip according to Claim 1, wherein the composition has been formulated to be self-adhesive.

7. Adhesive tape strip according to Claim 1, comprising antioxidants, UV stabilizers, colorants, fillers and/or other customary auxiliaries.

8. Adhesive tape strip according to Claim 1, having a thickness of from 0.4 mm to 0.8 mm.

9. Adhesive tape strip according to Claim 1, comprising as thermoplastic rubber a styrene-butadiene block polymer and as tackifying resin a rosin derivative.

10. Adhesive tape strip according to Claim 1, where the ratio of peel strength to tensile strength is from 1:2 to 1:3.

11. Adhesive tape strip according to Claim 1, where the hot mixture of base materials is kneaded and extruded.

12. Use of an adhesive tape strip according to one of Claims 1-11 for structural bonds which despite their high shear strength can be separated again without residue or damage by pulling on the tape in the direction of the bond plane.

## Revendications

1. Bande de feuille adhésive double face pour liaisons collées détachables, comportant une masse adhésive à base de
a) caoutchouc thermoplastique et
b) résines collantes, où la feuille adhésive
c) présente une haute élasticité et
d) une faible plasticité et où
e) l'adhésion est inférieure à la cohésion,
f) le pouvoir adhésif disparaît pratiquement lors de l'étirage de la feuille,
g) le rapport de la force de pelage à la charge de déchirement est de 1:1,5 ou supérieur, et où
h) une liaison collée ainsi réalisée est détachable par traction de la feuille adhésive en direction du plan de collage, **caractérisée en ce que**
i) la masse adhésive contient en mélange une résine d'alkylphénol réactive aux bases.

2. Bande de feuille adhésive selon la revendication 1, **caractérisée en ce que** la résine réactive est une résine activable par la chaleur.

3. Bande de feuille adhésive selon la revendication 1, **caractérisée en ce que** la résine réactive constitue de 10 à 30% en poids, en particulier de 15 à 25% en poids, de la masse adhésive.

4. Bande de feuille adhésive selon la revendication 1, **caractérisée en ce que** la résine réactive est mise en oeuvre avec un oxyde métallique, en particulier de l'oxyde de magnésium.

5. Bande de feuille adhésive selon la revendication 5, **caractérisée en ce que** l'oxyde métallique représente de 1 à 3% en poids, en particulier de 1,5 à 2,5% en poids, de la masse adhésive.

6. Bande de feuille adhésive selon la revendication 1, où la masse est autoadhésive.

7. Bande de feuille adhésive selon la revendication 1, contenant des antioxydants, des stabilisants aux UV, des colorants, des matières de remplissage et/ou d'autres adjuvants usuels.

8. Bande de feuille adhésive selon la revendication 1, présentant une épaisseur de 0,4 à 0,8 mm.

9. Bande de feuille adhésive selon la revendication 1, contenant comme caoutchouc thermoplastique un copolymère bloc de styrène-butadiène et comme résine collante un dérivé de colophane.

10. Bande de feuille adhésive selon la revendication 1, où le rapport de la force de pelage à la charge de déchirement est de 1:2 à 1:3.

11. Bande de feuille adhésive selon la revendication 1, où le mélange de matières premières est malaxé à chaud et extrudé.

12. Utilisation d'une bande de feuille adhésive selon l'une des revendications 1 à 11 pour des collages structurels, lesquels, en dépit de leur haute résistance au cisaillement, peuvent être à nouveau séparés sans résidus et sans dommages par traction de la feuille en direction du plan de collage.
